Europäisches Patentamt

(19) European Patent Office

Office européen des brevets

(11) Veröffentlichungsnummer: **0 132 695**
**B1**

(12) **EUROPÄISCHE PATENTSCHRIFT**

(45) Veröffentlichungstag der Patentschrift:
05.11.86

(51) Int. Cl.⁴: **B 60 T 15/42**

(21) Anmeldenummer: **84108069.0**

(22) Anmeldetag: **10.07.84**

(54) Steuerventil für Druckluftbremsen von Schienenfahrzeugen.

(30) Priorität: 02.08.83 DE 3327888

(43) Veröffentlichungstag der Anmeldung:
13.02.85 Patentblatt 85/7

(45) Bekanntmachung des Hinweises auf die Patenterteilung:
05.11.86 Patentblatt 86/45

(84) Benannte Vertragsstaaten:
CH DE FR GB LI

(56) Entgegenhaltungen:
DE-B-1 021 878
DE-B-1 287 105
US-A-3 554 615

(73) Patentinhaber: KNORR- BREMSE AG, Moosacher Strasse 80 Postfach 401060, D-8000 München 40 (DE)

(72) Erfinder: Grünert, Wolfgang, Hilblestrasse 30, D-8000 München 19 (DE)
Erfinder: Huber, Johann, Ohlmüllerstrasse 14, D-8000 München 90 (DE)

## Beschreibung

Die Erfindung bezieht sich auf ein Steuerventil für Druckluftbremsen von Schienenfahrzeugen, mit einer die Druckluftbeaufschlagung eines Bremszylinders vermittels entgegen Federkraft kolbenbetätigter Ventileinrichtungen bei Vollbremsungen auf einem niedrigen und bei Schnellbremsungen auf einen hohen Bremszylinderdruck begrenzenden Höchstdruckbegrenzungseinrichtung mit einer einem vom Hauptluftleitungsdruck entgegen einer Feder beaufschlagten Schaltkolben umfassenden Abschalteinrichtung zum Abschalten einer der beiden Bremszylinderdruck-Begrenzungen.

Ein den vorstehend genannten Merkmalen entsprechendes Steuerventil ist aus der US-A-3 554 615 bekannt, wonach zwei getrennte, auf unterschiedliche Anspruch-Druckhöhen eingestellte Druckbegrenzungseinrichtungen zueinander parallel in eine Druckluftversorgungsleitung zum Bremszylinder eingeordnet sind. Der Kolben derjenigen Druckbegrenzungseinrichtung, die auf den hohen Bremszylinderdruck eingestellt ist, ist dabei als Differentialkolben ausgebildet, dessen eine Kolbenfläche vom Hauptluftleitungsdruck und dessen andere, kleinere Kolbenfläche gleichgerichtet vom Druck stromab der Druckbegrenzungseinrichtung entgegen der Kraft einer Feder und in Schließrichtung der Veiltileinrichtung wirkend beaufschlagt sind. Hieraus ergibt sich der Mangel, daß bei Schnellbremsungen mit sich aus irgendwelchen Grunden nicht vollständig oder nur langsam entleerender Hauptluftleitung oder durch irgendwelche Ursachen bedingter Druckrückhaltung an der mit Hauptluftleitungsdruck beaufschlagten Differentialkolbenfläche der diese Differentialkolbenfläche beaufschlagende Restdruck zu einem vorzeitigen Schließen der Druckbegrenzungseinrichtung bei noch nicht erreichten, hohem Bremszylinderdruck führt; hieraus kann sich eine zu schwache Abbremsung des Schienenfahrzeuges in Notfällen ergeben.

Es ist Aufgabe der Erfindung, ein Steuerventil der eingangs genannten Art mit einfachen Mitteln derart auszuzugestalten, daß die Höchstdruckbegrenzungseinrichtung ungestört von eventuellen Hauptluftleitungs-Druckresten stets sicher und zuverlässig arbeitet, d.h., den Bremszylinderdruck exakt auf den niedrigen bzw. den hohen Bremszylinderdruck begrenzt und damit ein Erreichen der jeweils maximal möglichen Fahrzeugabbremsung zuläßt.

Diese Aufgabe wird nach der Erfindung dadurch gelöst, daß der Schaltkolben höchstens bei betätigter Abschalteinrichtung mechanisch oder in keinem Falle mit der kolbenbetätigten Ventileinrichtung gekoppelt ist. Hierdurch wird erreicht, daß bei unbetätigter Abschalteinrichtung, also wirksamer Druckbegrenzungseinrichtung, der Schaltkolben keinerlei Einfluß auf die kolbenbetätigte Ventileinrichtung der Höchstdruckbegrenzungseinrichtung nehmen und diese somit ungestört und korrekt arbeiten kann.

Die Unteransprüche zeigen vorteilhafte Ausgestaltungsmöglichkeiten für ein nach der Erfindung ausgebildetes Steuerventil auf.

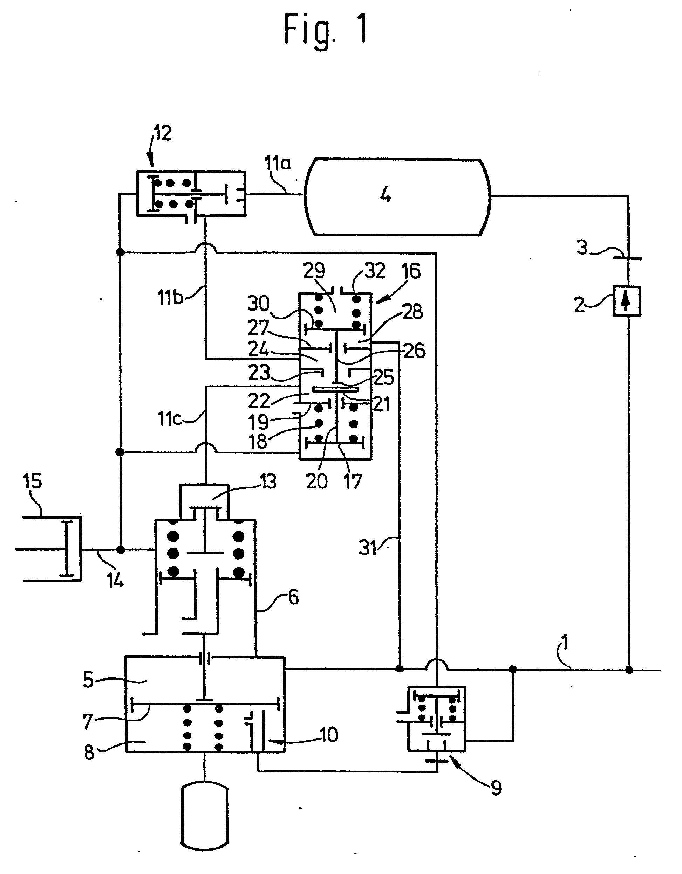

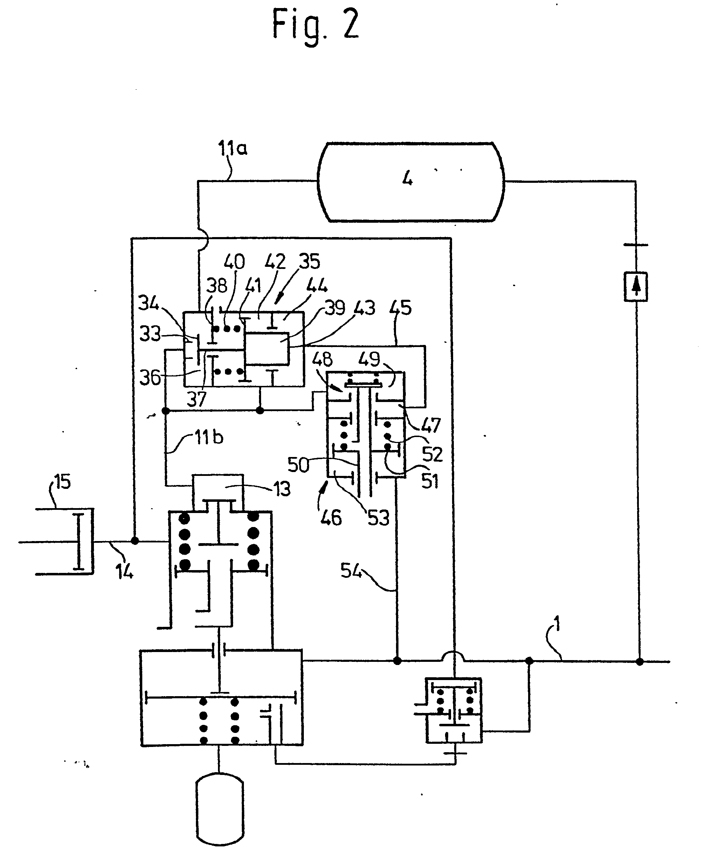

In der Zeichnung Fig. 1 und Fig. 2 sind zwei unterschiedliche Ausführungsbeiapiele für nach der Erfindung ausgebildete Steuerventile schematisch und irhren für die Erfindung wesentlichen Teilen dargestellt.

An eine Hauptluftleitung 1 ist über eine als Rückschlagventil 2 und Düse 3 dargestellte Überwacheinrichtung ein Bremsluftvorratsbehälter 4 angeschlossen. Weiterhin ist an die Hauptluftleitung 1 die Steuerkammer 5 eines Dreidrucksteuerventils 6 angeschlossen, welche mittels eines Steuerkolbens 7 von einer Kammer konstanten Druckes 8 abgetrennt ist. Die Kammer konstanten Druckes 8 ist aus der Hauptluftleitung 1 über ein Überwachventil 9 und eine Füllstoßschutzeinrichtung 10 jeweils üblicher Bauart aufladbar. Vom Bremsluftbehälter 4 führt eine in Abschnitte 11a, 11b und 11c untergliederte Speiseleitung durch eine Druckbegrenzungseinrichtung 12 in einen der Ventileinrichtung des Dreidrucksteuerventils 6 unmittelbar vorgeordneten Speiseraum 13 des Dreidrucksteuerventils 6. Der vom Dreidrucksteuerventil 6 aussteuerbare Bremszylinderdruck wird über eine Bremszylinderdruckleitung 14 einem Bremszylinder 15 der Druckbegrenzungseinrichtung 12 und dem Überwachventil 9 zugeführt. Insoweit entspricht der Aufbau des Steuerventils nach Fig. 1 der Einrichtung nach der DE-A 1 021 878, so daß sich weitere Erläuterungen dieser bekannten Anordnung erübrigen. Auch die Funktionsweise des Steuerventils nach Fig. 1 entspricht mit der Ausnahme, daß die Druckbegrenzungseinrichtung 12 wie später näher erläutert, auf einen hohen Bremszylinderdruck anspricht, der höher liegt als der Schließdruck der entsprechenden Druckbegrenzungseinrichtungen nach der DE-A-1 021 878,der Funktionsweise dieser bekannten Einrichtung, so daß sich auch hinsichtlich der Funktionsweise weitere Erläuterungen erübrigen.

Gemäß Fig. 1 ist zwischen die Abschnitte 11b und 11c der Speiseleitung eine zweite Druckbegrenzungseinrichtung 16 eingeordnet, die beiden Druckbegrenzungseinrichtungen 12 und 16 befinden sich also in Serie zueinander in der Speiseleitung 11a, 11b, 11c. Wie die Druckbegrenzungseinrichtung 12 weist auch die Druckbegrenzungseinrichtung 16 einen vom Druck in der Bremszylinderdruckleitung 14 beaufschlagten Kolben 17 auf, der andererseits von einer Feder 18 und vom Atmosphärendruck belastet ist. Der Kolben 17 ist mittels eines abgedichtet verschieblich in einer Gehäusetrennwand 19 geführten Stößels 20 mit einem Ventilteller 21 verbunden, der sich in einem an den Abschnitt 11c der Speiseleitung angeschlossenen Raum 22 befindet. Der Ventilteller 21 bildet zusammen mit einem gehäusefesten Ventilsitz 23 eine Ventileinrichtung 21, 23, welche die Verbindung eines an den Abschnitt llb der Speiseleitung angeschlossenen Raumes 24 mit dem Raum 22 überwacht. Die Feder 18 belastet über den Kolben 17 die Ventileinrichtung 21, 23 in Öffnungsrichtung. Insoweit entspricht der Aufbau der Druckbegrenzungseinrichtung 16 demjenigen der Druckbegrenzungseinrichtung 12. Die Feder 18 und der Kolben 17 sind derart dimensioniert, daß die Ventileinrichtung 21, 23 bei einer Druckhöhe in der Bremszylinderdruckleitung 14 schließt, welche niedrig ist und der maximal zulässigen Druckbeaufschlagung des Bremszylinders 15 bei Betriebs- und Vollbremsungen entspricht, während welchen der Druck in der Hauptluftleitung 1 von Regeldruckhöhe bis auf eine um einen bestimmten Wert unterhalb dieser Regeldruckhöhe liegende, mittlere Druckhöhe absenkbar ist. Die Feder und der Kolben der Druckbegrenzungseinrichtung 12 sind dagegen derart bemessen, daß die Druckbegrenzungseinrichtung 12 erst bei einer größeren Druckhöhe in der Bremszylinderdruckleitung 14, also bei einem hohen Bremszylinderdruck schließt; dieser hohe Bremszylinderdruck ist nur bei einer Schnellbremsung erreichbar, während welcher der in der Hauptluftleitung 1 herrschende Druck unter die erwähnte mittlere Druckhöhe, vorzugsweise bis auf Atmosphärendruck abgesenkt wird.

Die Druckbegrenzungseinrichtung 16 weist des weiteren einen seitens des Ventilsitzes 23 vor dem Ventilteller 21 mit einer Anschlagkupplung 25 endenden Stößel 26 auf, der abgedichtet verschieblich eine Gehäusetrennwand 27 durchsetzt und mit einem zwei Räume 28 und 29 voneinander trennenden Schaltkolben 30 endet. Der stößelseitige Raum 28 steht über eine Leitung 31 mit der Hauptluftleitung 1 in Verbindung und im andersseitigen, entlüfteten Raum 29 befindet sich eine den Schaltkolben 30 in Schließrichtung der Anschlagkupplung 25 belastende Feder 32.

Bei betriebsbereiter, aufgeladener und gelöster Bremse mit Regeldruckhöhe führender Hauptluftleitung 1 hält der im Raum 28 herrschende Regeldruck den Schaltkolben 30 entgegen der Kraft der Feder 32 in einer zum Raum 29 verschobenen Stellung, in welcher die Anschlagkupplung 25 mit beachtlichem Abstand gelöst ist, d.h., der Stößel 26 mit beachtlichem Abstand vor dem Ventilteller 21 endet. Die Ventileinrichtungen beider, eine Höchstdruckbegrenzungseinrichtung bildender Druckbegrenzungseinrichtungen 12 und 16 sind bei druckloser Bremszylinderdruckleitung 14 geöffnet.

Wird zum Einleiten einer Betriebs- oder Vollbremsung der Druck in der Hauptluftleitung 1 von der Regeldruckhöhe bis maximal zur mittleren Druckhöhe abgesenkt, so steuert das Dreidrucksteuerventil 6 in die Bremszylinderdruckleitung 14 und den Bremszylinder 15 aus dem Bremsluftbehälter 4 eine der jeweiligen Hauptluftleitungs-Druckabsenkung entsprechende Bremsdruckhöhe ein. Bei Erreichen des Vollbremszustandes reicht die Bremsdruckbeaufschlagung des Kolbens 17 aus, um den Kolben 17 entgegen der Kraft der Feder 18 anzuheben und die Ventileinrichtung 21, 23 durch Aufsetzen des Ventiltellers 21 auf den Ventilsitz 23 zu schließen. Der Schaltkolben 30 verbleibt während dieser Vorgänge in Ruhe, die Anschlagkupplung 25 somit geöffnet. Durch Schließen der Ventileinrichtung 21, 23 wird der in dem Bremszylinder 15 einsteuerbare Druck auf die niedrige Druckhöhe begrenzt.

Wird der Druck in der Hauptluftleitung 1 dagegen unter die mittlere Druckhöhe, vorzugsweise bis auf Atmosphärendruck abgesenkt, wie es für Schnellbremsungen üblich ist, so vermag die Feder 32 den Schaltkolben 30 gegen den nunmehr zumindest nahezu drucklosen Raum 28 abwärts zu drücken, wobei sich die Anschlagkupplung 25 schließt und vermittels des Stößels 26 die Ventileinrichtung 21, 23 geöffnet gehalten wird. Es vermag somit, ausgehend vom vorbeschriebenen Vollbremszustand, weiterhin Druckluft aus dem Bremsluftbehälter 4 über das Dreidrucksteuerventil 6 in den Bremszylinder 15 einzuströmen, so daß sich in letzterem ein höherer Bremsdruck aufbaut; dieser hohe Bremsdruck reicht jedoch nicht aus, um über den Kolben 17 die Ventileinrichtung 21, 23 entgegen der Kraft der Feder 32 zu schließen. Bei Erreichen eines bestimmten, hohen Bremszylinderdruckes schließt dagegen die Druckbegrenzungseinrichtung 12 und sperrt die weitere Druckluftzufuhr zum Bremszylinder 15 ab, so daß dessen Druckbeaufschlagung auf den erwähnten, hohen Bremsdruck begrenzt wird.

Beim Lösen der Bremse spielen sich entsprechend umgekehrte Vorgänge ab. Es ist wesentlich, daß zu keinem Zeitpunkt und in keinem Bremszustand die jeweils augenblicklich in der Hauptluftleitung 1 herrschende Druckhöhe das Schließverhalten der Druckbegrenzungseinrichtungen 12 und 16 derart zu beeinflußen vermag, daß von den vorgeschriebenen Sollwerten abweichende Druckbegrenzungen für den Bremszylinderdruck verursacht werden können; der Schaltkolben 30 mit der Feder 32 und der Anschlagkupplung 25 stellt vielmehr eine Abschalteinrichtung dar, welche die Druckbegrenzungseinrichtung 16 entweder voll funktionsfähig beläßt oder, bei Schnellbremsungen, vollständig im geöffneten Zustand abschaltet.

Abweichend zu der Ausführung nach Fig. 1 können die beiden Druckbegrenzungseinrichtungen natürlich auch entsprechend der erwähnten US-A 3 554 615 parallel zueinander in die Speiseleitung IIa, IIb und IIc eingeordnet werden, dabei ist die auf den hohen Bremszylinderdruck abgestimmte Druckbegrenzungseinrichtung 12 mit einem einerseits von einer Feder und andererseits vom Druck in der Hauptluftleitung 1 belasteten Schaltkolben über eine Anschlagkupplung derart zu koppeln, daß vom Druck in der Hauptluftleitung entgegen der Kraft der Feder und über die Anschlagkupplung die Druckbegrenzungseinrichtung während Druckabsenkungen in der Hauptluftleitung, welche Betriebsbremsungen bis zur Vollbremsung bewirken, geschlossen gehalten wird. Die andere, auf den niedrigen Bremszylinderdruck eingestellte Druckbegrenzungseinrichtung bedarf dagegen keines einerseits von der Hauptluftleitung 1 und andererseits von einer Feder belasteten Schaltkolbens und arbeitet daher in üblicher, bekannter Weise, wobei sie den Bremszylinderdruck auf die niedrige, bei Vollbremsungen maximal zulässige Druckhöhe begrenzt. Bei Schnellbremsungen sinkt der Druck in der Hauptluftleitung 1 derart weit ab, daß die Feder den Schaltkolben entgegen der Hauptluftleitungsdruckbelastung zu verschieben, die Anschlagkupplung also zu öffnen vermag, wodurch die auf hohen Bremszylinderdruck justierte Druckbegrenzungseinrichtung aus ihrer zuvor geschlossenen Abschaltstellung in Funktion gesetzt wird und öffnet, bis der hohe, einer Schnellbremsung entsprechende Maximal-Bremszylinderdruck erreicht ist und erst dann zur Begrenzung dieses Druckes in üblicher Weise schließt.

Die Druckbegrenzungseinrichtungen selbst müssen auch nicht in der einfachen, in Fig. 1 dargestellten Weise ausgebildet sein, sie können vielmehr zum Verbessern ihres Schaltverhaltens die aus der DE-C 1 287 105 bekannte Konstruktion erhalten. Weiterhin kann abweichend zu Fig. 1 es vorteilhaft sein, eine oder beide Druckbegrenzungseinrichtungen nicht in der Speiseleitung IIa, IIb, IIc anzuordnen, sondern eine oder auch beide Druckbegrenzungseinrichtungen können unmittelbar in die Bremszylinderdruckleitung 14 zwischen dem Dreidrucksteuerventil 6 und dem Bremszylinder 15 eingeordnet und vom von ihnen jeweils stromab herrschenden Druck gesteuert sein. Auch hierbei sind selbstverständlich konstruktive Ausgestaltungen der Druckbegrenzungseinrichtungen gemäß der erwähnten DE-PS 1 287 105 möglich. Diese Änderungen sind des weiteren bei der vorerwähnten Parallelschaltung der beiden Druckbegrenzungseinrichtungen ebenfalls möglich.

Weiterhin ist es möglich, die beiden Druckbegrenzungseinrichtungen gemäß Fig. 2 zu einer Baueinheit zusammenzufassen. Nach Fig. 2 ist zwischen den Abschnitten IIa und IIb der vom Bremsluftbehälter 4 zum Speiseraum 13 führenden Speiseleitung eine aus einem gehäusefesten Ventilsitz 33 und einem beweglichen Ventilteller 34 gebildete Ventileinrichtung 33, 34 einer Druckbegrenzungseinrichtung 35 eingeordnet. Der Innenraum des Ventilsitzes 33 steht mit dem Abschnitt IIb und ein den Ventilteller 34 aufnehmender Raum 36 mit dem Abschnitt IIa der Speiseleitung in Verbindung. Der Ventilteller 34 ist an einem Stößel 37 gehalten, der abgedichtet verschieblich eine Gehäusetrennwand 38 durchsetzt und mit seinem zweiten Ende an einem Differentialkolben 39 gehalten ist, dessen große, dem Ventilteller 34 zugewandte Kolbenfläche von der Kraft einer Feder 40 und Atmosphärendruck belastet ist. Eine in Schließrichtung der Ventileinrichtung 33, 34 wirkende Ringfläche 41 des Differentialkolbens 39 begrenzt einen Raum 42, der ständig an den Abschnitt IIb der Speiseleitung und damit an den Speiseraum 13 angeschlossen ist. Die kleine Kolbenfläche 43 des Differentialkolbens 39 begrenzt einen Raum 44, der über eine Leitung 45 mit einem Wechselventil 46 in Verbindung steht. Die Leitung 45 mündet in einen Raum 47 des Wechselventils 46, der über ein Doppelventil 48 entweder mit einem Raum 49 oder durch ein Ventilrohr 50 mit der Atmosphäre verbindbar ist. Der Raum 49 ist ständig an den Abschnitt IIb der Speiseleitung angeschlossen. Das Ventilrohr 50 trägt einen Schaltkolben 51, der in Schaltrichtung des Doppelventils 48 zur Entlüftung des Raumes 47 von Atmosphären druck und der Kraft einer Feder 52 und andererseits vom Druck in einem Raum 53 belastet ist; der Raum 53 ist über eine Leitung 54 ständig an die Hauptluftleitung 1 angeschlossen. Im übrigen entspricht das Steuerventil nach Fig. 2 in seinem Aufbau demjenigen nach Fig. 1, wobei jedoch die Druckbegrenzungseinrichtungen 12 und 16 sowie der Abschnitt IIc der Speiseleitung entfallen. Die Ventileinrichtung 33, 34 kann in Rückströmrichtung durch ein nicht dargestelltes Rückschlagventil überbrückt sein.

Die Flächensumme von Ringfläche 41 und Kolbenfläche 43 sowie die Kraft der Feder 40 sind derart abgestimmt, daß die Ventileinrichtung 33, 34 beim Erreichen des niedrigen, zu begrenzenden und höchstens Vollbremsungen entsprechenden Bremszylinderdruckes in den Räumen 42 und 44 schließt; die Ringfläche 41 ist dabei derart bemessen, daß sie im Zusammenwirken mit der Feder 40 bei alleiniger Beaufschlagung des Raumes 42 mit dem Bremszylinderdruck und entlüftetem Raum 44 ein Schließen der Ventileinrichtung 33, 34 bei Erreichen des hohen, Schnellbremsungen entsprechenden Bremsdruckes im Raum 42 bewirkt.

Der Kolben 51 und die Feder 52 des Wechselventils 46 sind derart bemessen, daß bei Druckhöhen im Raum 53, welche wenigstens die bereits erwähnte, mittlere Druckhöhe in der Hauptluftleitung 1 erreichen, welche Vollbremsungen bewirkt, der Kolben 51 entgegen der Kraft der Feder 52 angehoben ist, wobei sich das Wechselventil 48 in einer die beiden Räume 47 und 49 miteinander verbindenden Schaltstellung befindet. Der Raum 44 ist daher mit dem von der Druckbegrenzungseinrichtung 35 zu begrenzenden, im Abschnitt IIb der Speiseleitung herrschenden Druck beaufschlagt und die Druckbegrenzungseinrichtung 35 begrenzt somit den im Abschnitt IIb herrschenden Druck auf die niedrige Druckhöhe. Diese Funktion bleibt erhalten, solange in der Hauptluftleitung 1 eine Betriebs- und höchstens Vollbremsungen entsprechende Druckhöhe herrscht. Wird der Druck in der Hauptluftleitung 1 unter den erwähnten, mittleren Wert zum Erreichen einer Schnellbremsung abgesenkt, so vermag die Feder 52 den Kolben 51 entgegen dem mit dem Hauptluftleitungsdruck abgesenkten Druck im Raum 53 abwärts zu verschieben, wobei das Doppelventil 48 umschaltet, die Räume 47 und 49 voneinander trennt und den Raum 47 und damit über die Leitung 45 auch den Raum 44 durch das Ventilrohr 50 in die Atmosphäre entlüftet. Die Druckbegrenzungseinrichtung 35 schließt die Ventileinrichtung 33, 34 daher erst bei Erreichen eines hohen Bremszylinderdruckes im Abschnitt IIb der Speiseleitung, wie es für Schnellbremsungen erforderlich ist. Die übrige Funktion des Steuerventils nach Fig. 2 stimmt mit derjenigen nach Fig. 1 überein und braucht daher nicht nochmals beschrieben zu werden.

Auch bei der Anordnung nach Fig. 2 ist es natürlich möglich, die Räume 42 und 44 unmittelbar bzw. über das Wechselventil 46 nicht mit dem Abschnitt IIb der Speiseleitung, sondern der Bremszylinderdruckleitung 14 zu verbinden; auch kann die Ventileinrichtung 33, 34 nicht zwischen die Abschnitte IIa und IIb der Speiseleitung eingeordnet, sondern dem Bremszylinder 15 unmittelbar oder höchstens durch ein übliches, gegebenenfalls lastabhängig steuerbares Relaisventil abgetrennt vorgeschaltet werden. Weiterhin kann die Druckbegrenzungseinrichtung 35 konstruktive Abwandlungen erfahren, beispielsweise können die Ringfläche 41 und die Kolbenfläche 43 gegeneinander wirkend angeordnet werden, derart, daß bei Beaufschlagung beider Kolbenflächen die Druckbegrenzungseinrichtung beim hohen Bremszylinderdruck, beim Beaufschlagen nur einer der genannten Kolbenflächen dagegen beim niedrigen Bremszylinderdruck schließt; das Wechselventil 46 ist dabei mit zu Fig. 2 umgekehrter Schaltfunktion auszubilden.

Es ist wesentlich, daß auch bei der Ausführung nach Fig. 2 der Hauptluftleitungsdruck über eine pneumatische Kupplung die Druckbegrenzungseinrichtung 35 lediglich auf die Druckbegrenzung bei niedrigem bzw. hohem Bremszylinderdruck einzustellen, die sonstige Funktionsweise der Druckbegrenzungseinrichtung jedoch nicht zu beeinflußen vermag.

Im vorstehenden ist davon ausgegangen, daß die Anordnungen nach Fig. 1 und Fig. 2 mit Ausnahme der Hauptluftleitung 1, des Bremsluftbehälters 4 und des Bremszylinders 15 in üblicher Weise zu einem Steuerventil zusammengefaßt sind; selbstverständlich ist es jedoch auch möglich, die Anordnung mit Einzelventilen zu realisieren und somit ein Steuerventil in aufgelöster Bauform zu bilden. Selbstverständlich ist es möglich, das Steuerventil mit bekannten, sonstigen Einrichtungen, beispielsweise einem dem Bremszylinder 15 vorzuschaltenden, gegebenenfalls lastabhängigem Relaisventil, einem Zugartumstellgerät oder dergleichen auszustatten.

Bezugzeichenliste
1 Hauptluftleitung
2 Rückschlagventil
3 Düse
4 Bremsluftbehälter
5 Steuerkammer
6 Dreidrucksteuerventil
7 Steuerkolben
8 Kammer konstanten Druckes
9 Überwachventil
10 Füllstoßschutzeinrichtung
11a,b,c Abschnitte der Speiseleitung
12 Druckbegrenzungseinrichtung
13 Speiseraum
14 Bremszylinderdruckleitung
15 Bremszylinder
16 Druckbegrenzungseinrichtung
17 Kolben
18 Feder
19 Gehäusetrennwand
20 Stößel
21 Ventilteller
22 Raum
23 Ventilsitz
21, 23 Ventileinrichtung
24 Raum
25 Anschlagkupplung
26 Stößel
27 Gehäusetrennwand
28 Raum
29 Raum
30 Schaltkolben
31 Leitung
32 Feder
33 Ventilsitz
34 Ventilteller
33,34 Ventileinrichtung
35 Druckbegrenzungseinrichtung
36 Raum
37 Stößel
38 Gehäusetrennwand
39 Differentialkolben
40 Feder
41 Ringfläche
42 Raum
43 Kolbenfläche
44 Raum
45 Leitung

46 Wechselventil
47 Raum
48 Doppelventil
49 Raum
50 Ventilrohr
51 Schaltkolben
52 Feder
53 Raum
54 Leitung

**Patentansprüche**

1. Steuerventil für Druckluftbremsen von Schienenfahrzeugen, mit einer die Druckbeaufschlagung eines Bremszylinders (15) vermittels entgegen Federkraft (18; 40) kolbenbetätigter (17;39) Ventileinrichtungen (21, 23; 33, 34) bei Vollbremsungen auf einen niedrigen und bei Schnellbremsungen auf einen hohen Bremszylinderdruck begrenzenden Höchstdruckbegrenzungseinrichtung (12, 16; 35,46) mit einer einen vom Hauptluftleitungsdruck entgegen einer Feder (32; 52) beaufschlagten Schaltkolben (30; 51) umfassenden Abschalteinrichtung zum Abschalten einer der beiden Bremszylinderdruck-Begrenzungen, dadurch gekennzeichnet, daß der Schaltkolben (30, 51) höchstensbeibetätigter Abschalteinrichtung mechanisch (Fig. 1) oder in keinem Falle (Fig. 2) mit der kolbenbetätigten Ventileinrichtung (21, 23; 33, 34) gekoppelt ist.

2. Steuerventil nach Anspruch 1, dadurch gekennzeichnet, daß der Schaltkolben (30) über eine Anschlagkupplung (25) mit der kolbenbetätigten Ventileinrichtung (21, 23) zu deren Abschaltung kuppelbar ist.

3. Steuerventil nach Anspruch 2, wobei die Höchstdruckbegrenzungseinrichtung zwei getrennte Druckbegrenzungseinrichtungen (12, 16) aufweist, dadurch gekennzeichnet, daß die beiden Druckbegrenzungseinrichtungen (12, 15) in Serie zueinander dem Bremszylinder (15) mittel- oder unmittelbar vorgeschaltet sind und daß die Anschlagkupplung (25) im Schließzustand bei überwiegender Belastung des Schaltkolbens (30) durch die Feder (32) die dem niedrigen Bremszylinderdruck zugeordnete Druckbegrenzungseinrichtung (16) geöffnet hält.

4. Steuerventil nach Anspruch 2, wobei die Höchstdruckbegrenzungseinrichtung zwei getrennte Druckbegrenzungseinrichtungen aufweist, die zueinander parallel dem Bremszylinder mittel- oder unmittelbar vorgeschaltet sind, dadurch gekennzeichnet, daß die Anschlagkupplung im Schließzustand bei überwiegender Belastung des Schaltkolbens durch den Hauptluftleitungsdruck die dem hohen Bremszylinderdruck zugeordnete Druckbegrenzungseinrichtung geschlossen hält.

5. Steuerventil nach Anspruch 1, dadurch gekennzeichnet, daß die Höchstdruckbegrenzungseinrichtung (35) eine durch einen Differentialkolben (39) betätigbare Ventileinrichtung (33, 34) aufweist, wobei die eine Differentialkolbenfläche (41) ständig und die andere Differentialkolbenfläche (43) über ein vom Schaltkolben (51) schaltbares Wechselventil (46) wechselnd zu Atmosphärendruck vom Druck stromab der Ventileinrichtung (33, 34) beaufschlagbar ist.

6. Steuerventil nach Anspruch 5, dadurch gekennzeichnet, daß die Differentialkolbenflächen (41, 43) in Schließrichtung der Ventileinrichtung (33, 34) wirken und daß der Schaltkolben (51) bei überwiegender Belastung durch den Hauptluftleitungsdruck das Wechselventil (46) auf Druckbeaufschlagung auch der anderen Differentialkolbenfläche (43) schaltet.

**Claims**

1. Control valve for compressed air brakes of rail vehicles, having a maximum pressure limiting device (12, 16; 35, 46) limiting the pressure application of a brake cylinder (15) by means of valve devices (21, 23; 33, 34) piston-actuated (17; 39) against spring load (18; 40) to a low brake cylinder pressure in the case of full brake applications, and to a high brake cylinder pressure in the case of rapid decelerations, having a cut-off device incorporating an operating piston (30, 51) acted on by the main air line pressure against a spring (32; 52), for disconnecting one of the two brake cylinder pressure limits, characterised in that the operating piston (30, 51) is coupled to the piston-operated valve device (21, 23; 33, 34) at best mechanically when the cut-off device is actuated (Fig. 1) or not in any case (Fig. 2).

2. Control valve according to claim 1, characterised in that the operating piston (30) can be coupled by means of a stop coupling (25) to the piston-actuated valve device (21, 23) for its disconnection.

3. Control valve according to claim 2, wherein the maximum pressure limiting device has two separate pressure limiting devices (12, 16), characterised in that the two pressure limiting devices (12, 16) in series with one another are connected indirectly or directly in series with the brake cylinder (15), and in that in the closing state when there is a predominant loading of the operating piston (30) by the spring (32) the stop coupling (25) holds open the pressure limiting device (16) associated with the low brake cylinder pressure.

4. Control valve according to claim 2, wherein the maximum pressure limiting device has two separate pressure limiting devices which, parallel to each other, are connected in series indirectly or directly with the brake cylinder, characterised in that in the closing state when there is a predominant loading of the operating piston by the main air line pressure, the stop coupling holds closed the pressure limiting device associated with the high brake cylinder pressure.

5. Control valve according to claim 1, characterised in that the maximum pressure limiting device (35) has a valve device (33, 34) actuatable by a differential piston (39) whereby the one differential piston surface (41) can be acted on constantly, and the other differential piston surface (43) can be acted on alternately by means of a two-way valve (46) actuatable by the operating piston (51) to atmospheric pressure by the pressure downstream of the valve device (33, 34).

6. Control valve according to claim 5, characterised in that the differential piston surfaces (41, 43) work in the closing direction of the valve device (33, 34) and in that when there is a predominant loading by the main air line pressure the operating piston (51) switches the two-way valve (46) to pressure loading also of the other differential piston surface (43).

**Revendications**

1. Valve de commande pour des freins à air comprimé de véhicules sur rails comportant un disposiif de limitation de la pression maximale (12, 16; 35, 46) qui limite, à l'aide de dispositifs à soupape (21, 23; 33, 34) commandés par un piston, à l'encontre de la force de ressorts (18, 40), la charge en pression d'un cylindre de frein (15) à une pression basse dans le cylindre de frein, en cas de freiages à fond et à une pression élevée dans le cylindre de frein, en cas freinages rapides, ainsi qu'un dispositif d'inhibition comprenant un piston de commutation (30; 51) charé par la pression qui règne dans la conduite principale à l'encontre d'un ressort (32; 52) et servant à supprimer l'une des deux limitations de la pression dans le cylindre de frein, caractérisée par le fait que le piston de commutation (30, 51) est accouplé mécaniquement au dispositif à soupape (21, 23; 33, 34) commandé par piston, au plus lorsque le dispositif d'inhibition est actionné (Figure 1) ou n'est en aucun cas accouplé (Figure 2) avec ledit dispositif à soupape

2. Valve de commande selon la revendication 1, caractérisée par le fait que par l'intermédiaire d'un accouplement à butée (25), le piston de commutation (30) est susceptible d'être accouplé au dispositif à soupape (21, 23) commandé par piston, en vu de l'inhibition de ce dernier dispositif.

3. Valve de commande selon la revendication 2, du type dans laquelle le dispositif de limitation de la pression maximale comporte deux dispositifs de limitation de la pression (12, 16), caractérisée par le fait que les deux dispositifs de limitation de la pression (12, 16), en série entre eux, sont disposés indirectement ou directement en amont du cylindre de frein (15), et que l'accouplement à butée (25), à l'état fermé et en cas de charge prépondérante du piston de commutation (30) par le ressort (32), maintient ouvert le dispositif de limitation de pression (16) qui est associé à la pression la plus basse qui règne dans le cylindre de frein.

4. Valve de commande selon la revendication 2, du type dans laquelle le dispositif de limitation de la pression maximale comporte deux dispositifs de limitation de la pression (12, 16), caractérisée par le fait que les deux dispositif de limitation de la pression (12, 16), en parallèle entre eux, sont disposés indirectement ou directement en amont du cylindre de frein (15), et que l'accouplement à butée (25), à l'état fermé et en cas de charge prépondérante du piston de commutation (30) par le ressort (32), maintient fermé le dispositif de limitation de pression (16) qui est associé à la pression élevée qui règne dans le cylindre de frein.

5. Valve de commande selon la revendication 1, caractérisée par le fait que le dispositif de limitation de la pression maximale (35) comporte un dispositif à soupape (33, 34) susceptible dêtre commandé par un piston différentiel (39), l'une des surfaces (41) du piston différentiel étant susceptible d'être chargée en permanence et l'autre surface (43) du piston étant susceptible d'être chargée en alternance par rapport à la pression atmosphérique et par l'intermédiaire d'une valve à deux voies (46) susceptible d'étre commandée par le piston de comnutation (51), par la pression qui règne en aval du dispositif à soupapes (33, 34).

6. Valve de commande suivant la revendication 5, caractérisée par le fait que les surfaces (41, 43) du piston différentiel agissent dans le sens de la fermeture du dispositif à soupapes (33, 34), et que le piston de commutation (51), en cas d'une charge prépondérante par la pression qui règne dans la conduite principale, commute la valve à deux voies (46) dans une position de charge en pression, aussi de l'autre surface (43) du piston différentiel.

# Fig. 1

# Fig. 2